# EUROPEAN PATENT APPLICATION

(11) **EP 4 726 342 A1**
(43) Date of publication of application: **15.04.2026**
(21) Application number: 25186798.2
(22) Date of filing: 01.07.2025
(51) Int. Cl.: G01K 1/02

(54) **TEMPERATURE MEASUREMENT APPARATUS AND METHOD AND BATTERY APPARATUS**

(30) Priority: 11.10.2024 KR 20240138637
(71) Applicant: SAMSUNG SDI CO., LTD., Yongin-si, Gyeonggi-do 17084 (KR)
(72) Inventor: SIM, Se Sub, 16678 Suwon-si (KR); CHO, Young Shin, 16678 Suwon-si (KR); KIM, Hyo Min, 16678 Suwon-si (KR)
(74) Representative: Marks & Clerk LLP

(57) **Abstract**

A temperature measurement apparatus includes a base; a thermistor array including a plurality of thermistors in different regions of the base; a power supply circuit configured to supply power to any one of the plurality of thermistors; and a processor connected to the plurality of thermistors and the power supply circuit, and configured to determine a target thermistor among the plurality of thermistors, to control the power supply circuit to supply the power to the target thermistor, to detect a resistance value of the target thermistor, and to calculate a temperature of a region corresponding to the target thermistor on the basis of the resistance value of the target therm istor.

## Description

### BACKGROUND

### 1. Field

Aspects of the present disclosure relate to a temperature measurement apparatus and method and a battery apparatus.

### 2. Description of the Related Art

A battery management system (BMS) operates to monitor a state of a battery cell, a state of a battery module, and a state of a battery pack and controls a battery or performs a protection function on the basis of a monitoring result. For example, a BMS monitors a voltage, a current, a temperature, and a state of charge (SOC) of a battery cell and performs a control operation such as balancing control, temperature control, and charging or discharging control for the battery cell or performs a protection operation such as switch control for preventing over-discharge or overcharge according to a monitoring result.

Such a BMS can be configured to use a thermistor for monitoring a temperature of a battery cell, a battery module, a battery pack, or the like. A plurality of thermistors may be installed in the battery pack to measure temperatures at various locations in the battery pack. However, there is a limitation on the number of thermistors applied to a battery pack due to a limitation of available terminals provided in a micro controller unit (MCU) of a BMS, and thus it is difficult to measure temperatures at various locations in a battery pack due to such a limitation.

The above information disclosed in this Background section is for enhancement of understanding of the background of the present disclosure, and therefore, it may contain information that does not constitute related (or prior) art.

### SUMMARY

Aspects of embodiments of the present invention are directed to a temperature measurement apparatus and method capable of measuring an internal temperature of each region in a sealed structure such as a battery pack.

However, objects that the present invention intends to achieve are not limited to the above-described objects and other objects that are not described may be clearly understood by those skilled in the art from the following description.

According to some embodiments of the present disclosure, there is provided a temperature measurement apparatus including: a base; a thermistor array including a plurality of thermistors in different regions of the base; a power supply circuit configured to supply power to any one of the plurality of thermistors; and a processor connected to the plurality of thermistors and the power supply circuit, and configured to determine a target thermistor among the plurality of thermistors, to control the power supply circuit to supply the power to the target thermistor, to detect a resistance value of the target thermistor, and to calculate a temperature of a region corresponding to the target thermistor on the basis of the resistance value of the target thermistor.

In some embodiments, the processor is configured to determine any one of the plurality of thermistors in a temperature measurement region as the target therm istor.

In some embodiments, the temperature measurement apparatus further includes a communication interface configured to communicate with an external apparatus, the processor is configured to set the temperature measurement region according to temperature measurement region information received through the communication interface, and the temperature measurement region information includes location information on the temperature measurement region.

In some embodiments, the external apparatus includes a battery management system.

In some embodiments, the plurality of thermistors is on the base in a matrix arrangement formed along a plurality of row lines and a plurality of column lines.

In some embodiments, the power supply circuit includes: a plurality of first transistors connected to the thermistors; a plurality of second transistors connected to the thermistors; a plurality of first wires connected to the first transistors that are connected to the thermistors located at the row lines; and a plurality of second wires connected to the second transistors that are connected to the thermistors located at the column lines.

In some embodiments, the power supply circuit further includes: a plurality of third wires that connect the first transistors and the thermistors; and a plurality of fourth wires that connect the second transistors and the thermistors, wherein the third and fourth wires are formed of a material that is dissolvable in a specific material.

In some embodiments, regions in which the third and fourth wires are positioned, among regions of the base, are formed of materials which are dissolvable in the specific material.

In some embodiments, the specific material includes an electrolyte of a battery.

In some embodiments, the processor is configured to: calculate a temperature of a region corresponding to an adjacent thermistor adjacent to the target thermistor; and determine that an abnormality occurs in the region corresponding to the target thermistor or the adjacent thermistor based on a difference between the temperature of the region corresponding to the adjacent thermistor and the temperature of the region corresponding to the target thermistor being greater than or equal to a reference temperature.

In some embodiments, the processor is configured to supply the power to the target thermistor by applying voltages to the first and second wires corresponding to the target thermistor to turn on the first and second transistors connected to the target thermistor.

In some embodiments, the processor is configured to: calculate a temperature of a region corresponding to each of the plurality of thermistors in the temperature measurement region by repeatedly performing a process of calculating the temperature of the region corresponding to the target thermistor while changing the target thermistor; and generate temperature information on the temperature measurement region from a result in which the temperature of the region corresponding to each of the plurality of thermistors is calculated.

In some embodiments, the temperature information includes information on a highest temperature in the temperature measurement region, a lowest temperature in the temperature measurement region, and an average temperature of the temperature measurement region.

According to some embodiments of the present disclosure, there is provided a method of measuring a temperature including: determining, by a processor, a target thermistor among a plurality of thermistors in different regions of a base; controlling, by the processor, a power supply circuit that is configured to supply power to any one of the plurality of thermistors, to supply the power to the target thermistor; detecting, by the processor, a resistance value of the target thermistor; and calculating, by the processor, a temperature of a region corresponding to the target thermistor on the basis of the resistance value of the target thermistor.

In some embodiments, in the determining of the target thermistor, the processor is configured to determine any one of the plurality of thermistors in a temperature measurement region as the target thermistor.

In some embodiments, the method further includes setting, by the processor, a temperature measurement region according to temperature measurement region information received from an external apparatus before the determining of the target thermistor, the temperature measurement region information includes location information on the temperature measurement region.

In some embodiments, the method further includes: calculating, by the processor, a temperature of a region corresponding to an adjacent thermistor adjacent to the target thermistor; and determining, by the processor, that an abnormality occurs in the region corresponding to the target thermistor or the adjacent thermistor based on a difference between the temperature of the region corresponding to the adjacent thermistor and the temperature of the region corresponding to the target thermistor being greater than or equal to a reference temperature.

In some embodiments, the method further includes: calculating, by the processor, a temperature of a region corresponding to each of the plurality of thermistors in the temperature measurement region by repeatedly performing a process of calculating the temperature of the region corresponding to the target thermistor while changing the target thermistor; and generating, by the processor, temperature information on the temperature measurement region from a result in which the temperature of the region corresponding to each of plurality of thermistors is calculated.

In some embodiments, the temperature information includes information on a highest temperature in the temperature measurement region, a lowest temperature in the temperature measurement region, and an average temperature of the temperature measurement region.

According to some embodiments of the present disclosure, there is provided a battery apparatus including: a battery management system; and a temperature measurement apparatus coupled to a battery cell or battery pack, and is configured to detect a temperature of at least a portion of an area in which the temperature measurement apparatus is coupled thereto according to a request from the battery management system to generate temperature information, and to transmit the generated temperature information to the battery management system.

However, effects that can be achieved through the present invention are not limited to the above-described effects and other effects that are not described may be clearly understood by those skilled in the art from the detailed descriptions.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view illustrating a prismatic battery according to some embodiments of the present invention;
FIG. 2 is a cross-sectional view illustrating the prismatic battery according to some embodiments of the present invention;
FIG. 3 is a view illustrating a battery module according to some embodiments of the present invention;
FIGS. 4A and 4B are views illustrating a battery pack according to some embodiments of the present invention;
FIG. 5 is a block diagram illustrating a temperature measurement apparatus according to some embodiments of the present invention;
FIG. 6 is a view illustrating a base, a thermistor array, and a power supply circuit according to some embodiments of the present invention;
FIG. 7 is a view illustrating a structure of the power supply circuit according to some embodiments of the present invention;
FIG. 8 is a block diagram illustrating a battery apparatus according to some embodiments of the present invention;
FIG. 9 is a view illustrating a flowchart of a process of measuring a temperature by a temperature measurement apparatus according to some embodiments of the present invention; and
FIG. 10 is a view illustrating a flowchart of a process of detecting an abnormality by a temperature measurement apparatus according to some embodiments of the present invention.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure. Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A structure of a battery to which a temperature measurement apparatus may be applied according to some embodiments will be schematically described first before some embodiments are specifically described. A prismatic battery will be described below as an example, but the temperature measurement apparatus may be applied to any one of various battery structures such as a coin structure, a cylindrical structure, and a pouch structure.

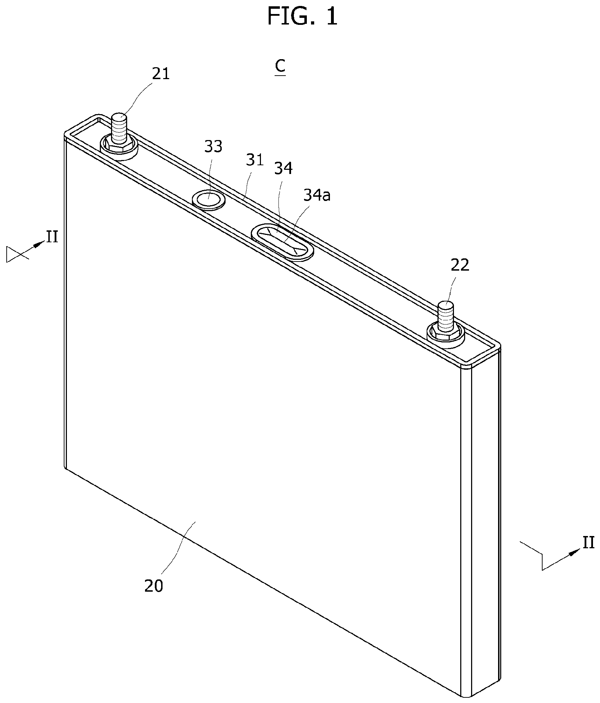

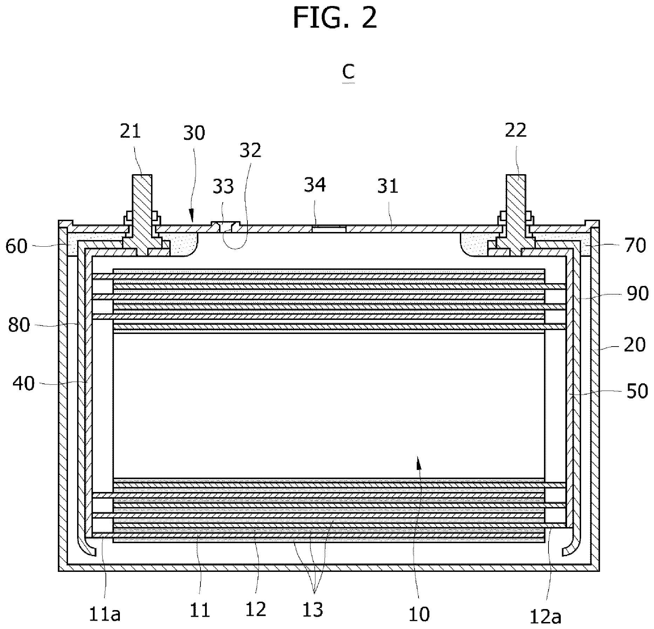

FIG. 1 is a perspective view illustrating a secondary battery according to some embodiments of the present invention. FIG. 2 is a cross-sectional view along the line II-II in FIG. 1, according to some embodiments of the present invention. (The same reference numerals found in other drawings may appear in FIGS. 1 and 2, but the reference numerals in FIGS. 1 and 2 are used exclusively within the context of FIGS. 1 and 2).

Referring to FIGS. 1 and 2, a battery cell C may include one or more electrode assemblies 10 in which a positive electrode 11, a negative electrode 12, and a separator 13, which is an insulator and is interposed between the positive electrode 11 and the negative electrode 12, are wound; a case 20 in which the electrode assembly 10 is installed; and a cap assembly 30 coupled to an opening of the case 20.

Hereinafter, a prismatic lithium-ion secondary battery will be described as an example of the battery cell C according to some embodiments. However, embodiments of the present invention are not limited thereto, and the disclosure herein may be applied to various suitable types of batteries such as a lithium polymer battery and a cylindrical battery.

The positive electrode 11 and the negative electrode 12 may include coated portions, which are regions in which current collectors formed of thin metal foils are coated with active materials, and uncoated portions 11a and 12a, which are regions not coated with active materials.

The positive electrode 11 and the negative electrode 12 are wound with the separator 13, which is the insulator and interposed therebetween. However, the embodiments of the present disclosure are not limited thereto, and the electrode assembly 10 may also be formed in a structure in which the positive electrode and the negative electrode formed of a plurality of sheets are alternately stacked with the separator interposed therebetween.

The case 20 may form an overall exterior of the secondary battery C and may be formed of a conductive metal such as aluminum, an aluminum alloy, or steel coated with nickel. In addition, the case 20 may provide a space in which the electrode assembly 10 is accommodated.

The cap assembly 30 may include a cap plate 31 covering the opening of the case 20. The case 20 and the cap plate 31 may be formed of a conductive material. In such examples, positive and negative terminals 21 and 22 electrically connected to the positive electrode 11 and the negative electrode 12 may be installed to pass and protrude outward through the cap plate 31.

In addition, circumferential surfaces of upper columns of the positive and negative terminals 21 and 22 protruding outward from the cap plate 31 may be machined as screws and fixed to the cap plate 31 using nuts.

However, embodiments of present invention are not limited thereto, and the positive and negative terminals 21 and 22 may be formed to have rivet structures and be rivet coupled, or be welded, to the cap plate 31.

In addition, the cap plate 31 may be formed of a thin plate and coupled to the opening of the case 20, an electrolyte injection hole 32, at which a sealing stopper 33 may be installed, may be formed in the cap plate 31, and a vent part 34 in which a notch 34a is formed may be installed in the cap plate 31.

The positive and negative terminals 21 and 22 may be electrically connected to current collectors including first and second current collectors 40 and 50 (hereinafter, positive and negative current collectors) welded to the positive uncoated portion 11a or the negative uncoated portion 12a.

For example, the positive and negative terminals 21 and 22 may be welded to the positive and negative current collectors 40 and 50. However, embodiments of present invention are not limited thereto, and the positive and negative terminals 21 and 22 may be formed to be integrally coupled to the positive and negative current collectors 40 and 50.

In addition, an insulating member may be installed between the electrode assembly 10 and the cap plate 31. In such examples, the insulating member may include first and second lower insulating members 60 and 70, and the first and second lower insulating members 60 and 70 may each be installed between the electrode assembly 10 and the cap plate 31.

In addition, according to some embodiments, one end of a separating member which may be installed to face one side surface of the electrode assembly 10 may be installed between the insulating member and the positive or negative terminal 21 or 22.

In such examples, the separating member may include first and second separating members 80 and 90.

Accordingly, one of the ends of the first and second separating members 80 and 90 which may be installed to face one side surface of the electrode assembly 10 may be installed between the first and second lower insulating members 60 and 70 and the positive and negative terminals 21 and 22.

Ultimately, the positive and negative terminals 21 and 22 welded to the positive and negative current collectors 40 and 50 may be coupled to one of the ends of the first and second lower insulating members 60 and 70 and the first and second separating members 80 and 90.

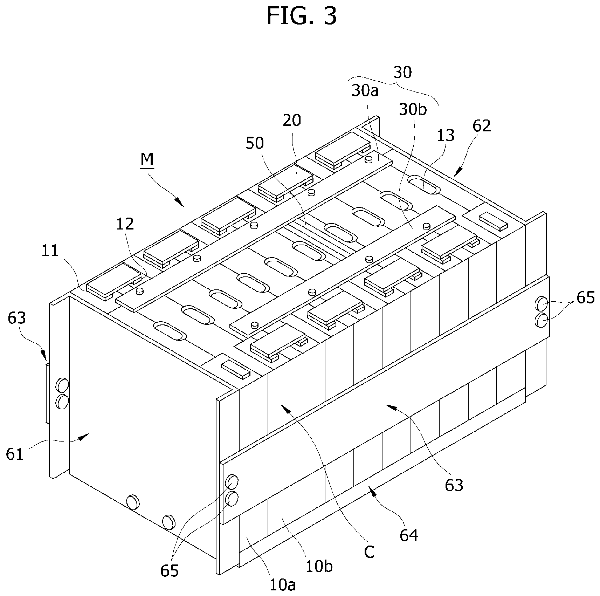

FIG. 3 is a perspective view illustrating a battery module according to some embodiments of the present invention (the same reference numerals found in other drawings may appear in FIG. 3, but the reference numerals in FIG. 3 are used exclusively within the context of FIG. 3).

Referring to FIG. 3, a battery module M according to some embodiments includes a plurality of battery cells C that are arrayed (e.g., stacked) in one direction and include terminal parts (i.e., positive and negative electrodes) 11 and 12, connecting tabs 20 each of which connects a battery cell 10a and another battery cell 10b adjacent thereto, and protection circuit modules 30 of which one of the side ends are connected to the connecting tabs 20. The protection circuit modules 30 may be battery management systems (BMSs). In addition, the connecting tab 20 includes a body portion (not shown) in contact with terminal parts 11 and 12 of the adjacent battery cells 10a and 10b and an extension portion extending from the body portion and connected to the protection circuit module 30. The connecting tab 20 may be a busbar.

First, a battery cell C may be formed of a battery case, an electrode assembly accommodated in the battery case, and an electrolyte. The electrode assembly and the electrolyte electrochemically interact to generate energy. The terminal parts 11 and 12 electrically connected to the connecting tab 20 and a vent 13 which is a discharge passage of gas generated in the battery cell C, may be provided at one side of the battery cell C. The terminal parts 11 and 12 of the battery cell C may be a positive electrode 11 and a negative electrode 12 having different polarities, and the terminal parts 11 and 12 of the adjacent battery cells 10a and 10b may be electrically connected in series or parallel by the connecting tabs 20 which will be described further below. Although an example of the serial connection has been illustrated and described, the present invention is not limited to such a structure, and any one of various structures may also be applied as desired. In addition, the number and an arrangement of battery cells are not limited to the structure illustrated in FIG. 3 and may be changed as desired.

The plurality of battery cells C may be arrayed (e.g., stacked) in one direction such that wide areas of the battery cells C face each other, and the plurality of arranged battery cells C may be fixed by a housing 61, 62, 63, and 64. The housing 61, 62, 63, and 64 may include a pair of end plates 61 and 62 facing the wide surfaces of the battery cells C and side plates 63 and a bottom plate 64, which connect the pair of end plates 61 and 62. The side plates 63 may support side surfaces of the battery cells C, and the bottom plate 64 may support bottom surfaces of the battery cells C. In addition, the pair of end plates 61 and 62, the side plates 63, and the bottom plate 64 may be connected by members such as bolts 65.

The protection circuit modules 30 may be provided with electronic components, protection circuits, and the like installed therein and electrically connected to the connecting tabs 20, which will be described in further detail below. The protection circuit modules 30 may include a first protection circuit module 30a and a second protection circuit module 30b extending at different locations in a direction in which the plurality of battery cells C are arrayed (e.g., stacked), and in such examples, the first protection circuit module 30a and the second protection circuit module 30b may be spaced a set or predetermined distance from each other, located parallel to each other, and electrically connected to the connecting tabs 20 adjacent thereto. For example, the first protection circuit module 30a may be formed to extend at one side of the plurality of battery cells C in the direction in which the plurality of battery cells C are arrayed (e.g., stacked), and the second protection circuit module 30b may be formed to extend at the other side of the plurality of battery cells C in the direction in which the plurality of battery cells C are arrayed (e.g., stacked), located to be spaced the set or predetermined distance from the first protection circuit module 30a with the vents 13 interposed therebetween, and disposed parallel to the first protection circuit module 30a. As described above, two protection circuit modules are disposed in parallel to be spaced apart from each other in the direction in which the plurality of battery cells are arrayed (e.g., stacked) to reduce (e.g., minimize) an area of a printed circuit board (PCB) constituting the protection circuit modules. As two protection circuit modules are provided separately, an unnecessary area of the PCB is reduced (e.g., minimized). In addition, the first protection circuit module 30a and the second protection circuit module 30b may be connected to each other by a conductive connecting member 50. In such examples, as one side of the connecting member 50 is connected to the first protection circuit module 30a and the other side thereof is connected to the second protection circuit module 30b, the two protection circuit modules may be electrically connected.

The connection may be completed by any one method of soldering, resistance welding, laser welding, projection welding, or the like.

In addition, as an example, the connecting member 50 may be an electric wire. In addition, the connecting member 50 may be an elastic or flexible material. Whether a voltage, a temperature, and a current of the plurality of battery cells C are normal may be checked and managed through the connecting member 50. That is, information of a voltage, a current, a temperature, and the like received from the connecting tab adjacent to the first protection circuit module and information of a voltage, a current, a temperature, and the like received from the connecting tab adjacent to the second protection circuit module may be integrally managed by the protection circuit modules through the connecting member.

In addition, when the battery cell C swells, an impact may be absorbed by the elasticity or flexibility of the connecting member 50 to prevent the first and second protection circuit modules 30a and 30b from being damaged.

In addition, a shape and a structure of the connecting member 50 are not limited to those illustrated in FIG. 3.

As the protection circuit modules 30 are provided as the first and second protection circuit modules 30a and 30b, the area of the PCB constituting the protection circuit modules can be reduce (e.g., minimized), and thus a space in the battery module may be secured. This facilitates not only fastening work for connecting the connecting tabs 20 and the protection circuit modules 30 but also repairment when an abnormality of the battery module is detected, thereby improving (e.g., increasing) working efficiency.

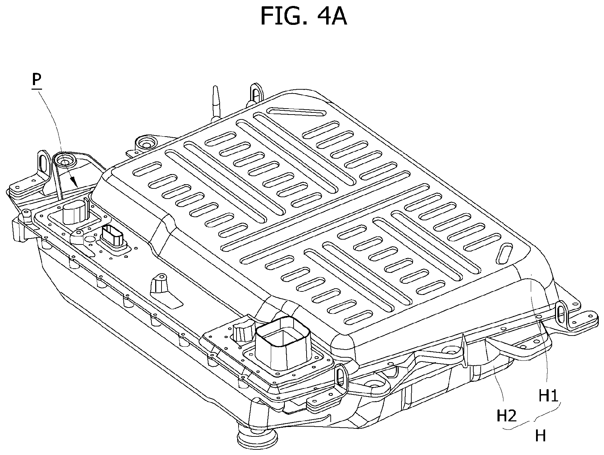

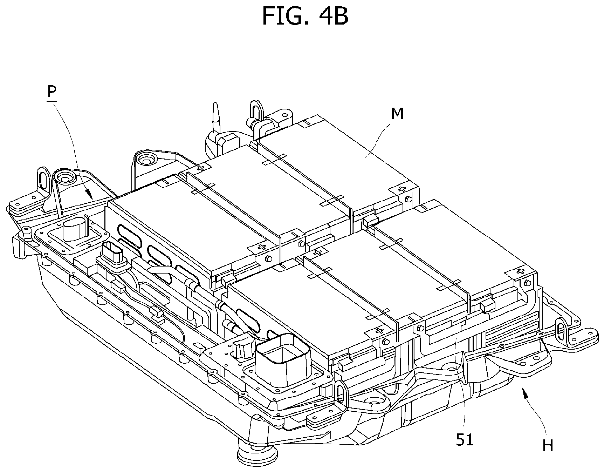

FIGS. 4A and 4B are example views illustrating a battery pack according to some example embodiments of the present invention (the same reference numerals found in other drawings may appear in FIGS. 4A and 4B, but the reference numerals in FIGS. 4A and 4B are used exclusively within the context of FIGS. 4A and 4B).

A battery pack P may include a plurality of battery modules M and a housing H for accommodating the plurality of battery modules M. For example, the housing H may include first and second housings H1 and H2, which are coupled to each other in facing directions with the plurality of battery modules M interposed therebetween. The plurality of battery modules M may be electrically connected to each other using a busbar 51, and the plurality of battery modules M may be electrically connected to each other in series, parallel, or a mixed manner thereof to obtain desired electrical output power.

Hereinafter, a temperature measurement apparatus according to some embodiments of the present invention will be described on the basis of the above-described battery structure.

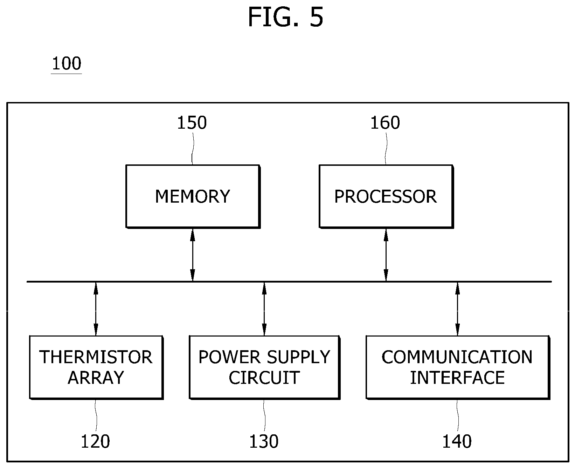

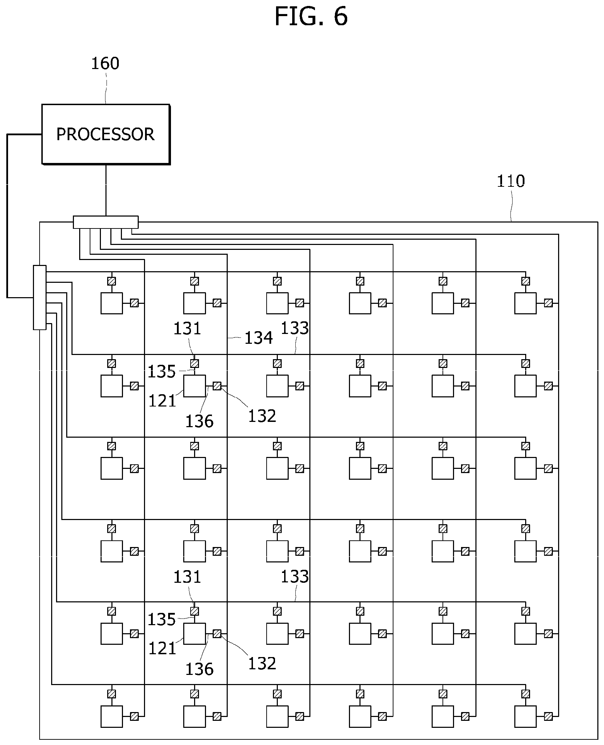

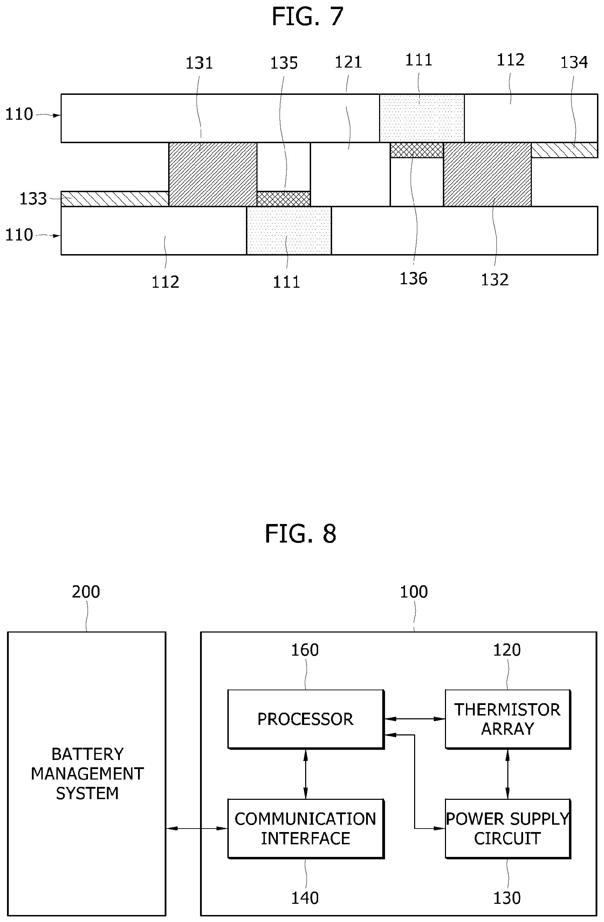

FIG. 5 is a block diagram illustrating the temperature measurement apparatus according to some embodiments of the present invention. FIG. 6 is an example view illustrating a base, a thermistor array, and a power supply circuit according to some embodiments of the present invention. FIG. 7 is a cross-sectional view illustrating a structure of the power supply circuit according to some embodiments of the present invention.

Referring to FIGS. 5 and 6, a temperature measurement apparatus 100 according to some embodiments may include a base 110, a thermistor array 120, a power supply circuit 130, a communication interface 140, a memory 150, and a processor 160, and, with a battery cell or battery module which is a temperature measurement target, the components may constitute a battery pack.

The base 110 may form an exterior of the temperature measurement apparatus 100. The base 110 may be formed of a substrate, film, or sheet. The base 110 may be coupled or attached to an object of which a temperature is to be measured (hereinafter, a target object). For example, the base 110 may be coupled or attached to the battery cell or the battery pack. A first region 111 of the base 110 may be formed of a first material, and a second region 112 of the base 110 may be formed of a second material. In some embodiments, the first region 111 of the base 110 may be a region in which third and fourth wires 135 and 136 are disposed among regions of the base 110, and the first material may be a nonconductive material (polymer), which is easily dissolved in a specific material. A region of the base 110 excluding the first region 111 may correspond to the second region 112, and the second material may be a nonconductive material, which is not easily dissolved in the specific material. In some embodiments, the specific material may be an electrolyte of a battery.

The thermistor array 120 may be disposed on the base 110. The thermistor array 120 may include a plurality of thermistors 121. The plurality of thermistors 121 constituting the thermistor array 120 may be disposed in different regions of the base 110. The plurality of thermistors 121 constituting the thermistor array 120 may be disposed on the base 110 in a matrix arrangement formed along a plurality of column lines and a plurality of row lines. Each of the plurality of thermistors 121 constituting the thermistor array 120 may be electrically connected to the processor 160 through an individual wire and may output information (e.g., a voltage signal or current signal) on a resistor to the processor 160 through the corresponding wire.

The thermistor 121 is a resistor with a characteristic that a resistance thereof changes according to a temperature, and types of thermistors may be divided into a positive temperature coefficient (PTC) thermistor, of which a resistance increases when a temperature increases, or a negative temperature coefficient (NTC) thermistor, of which a resistance decreases when a temperature increases. In some embodiments, the thermistor 121 may be a PTC type thermistor or NTC type thermistor. In some embodiments, the thermistor 121 may be used to measure a temperature at a specific location on the base 110, that is, a temperature of an object at the specific location.

The power supply circuit 130 may supply power to at least one of the plurality of thermistors 121 constituting the thermistor array 120. The power supply circuit 130 may be used to activate any one of the plurality of thermistors 121 constituting the thermistor array 120. The power supply circuit 130 may include a plurality of first transistors 131, a plurality of second transistors 132, a plurality of first wires 133, a plurality of second wires 134, a plurality of third wires 135, and a plurality of fourth wires 136.

The first transistor 131 may be electrically connected to the thermistor 121 and the first wire 133. The first transistor 131 may be interposed between the thermistor 121 and the first wire 133. The first transistor 131 may be connected to the processor 160 through the first wire 133 and turned on or off according to control of the processor 160. The first transistor 131 may be connected to a power source Vcc through a separate wire and may block the connection between the power source and the thermistor 121. The first transistor 131 may be a thin film transistor (TFT).

The second transistor 132 may be electrically connected to the thermistor 121 and the second wire 134. The second transistor 132 may be interposed between the thermistor 121 and the second wire 134. The second transistor 132 may be connected to the processor 160 through the second wire 134 and turned on or off (e.g., activated or deactivated) according to control of the processor 160. The second transistor 132 may be connected to a ground through a separate wire and may block the connection between the ground and the thermistor 121. The second transistor 132 may be a TFT. In the above-described example, although it is described that the first transistor 131 is connected to the power source and the second transistor 132 is connected to the ground, the power supply circuit 130 may also be formed with a structure in which the first transistor 131 is connected to the ground and the second transistor 132 is connected to the power source.

The first wires 133 may be electrically connected to the first transistors 131 connected to the thermistors 121 located in the row lines. The plurality of first transistors 131 disposed along the row lines may be electrically connected to the first wires 133. The first wires 133 may be electrically connected to gates of the first transistors 131. That is, the first wires 133 may be gate wires provided for controlling the first transistors 131.

The second wires 134 may be electrically connected to the second transistors 132 connected to the thermistors 121 located on the column lines. The plurality of second transistors 132 disposed along the column lines may be electrically connected to the second wires 134. The second wires 134 may be electrically connected to gates of the second transistors 132. That is, the second wires 134 may be gate wires provided for controlling the second transistors 132.

The third wires 135 may electrically connect the first transistors 131 and the thermistors 121. The fourth wires 136 may electrically connect the second transistors 132 and the thermistors 121. The third and fourth wires 135 and 136 may be formed of a conductive material easily dissolved in a specific material. In some embodiments, the specific material may be an electrolyte of the battery cell.

The communication interface 140 may communicate with an external apparatus. The communication interface 140 may communicate with various suitable types of external apparatuses according to various suitable types of communication methods. In some embodiments, the communication interface 140 may communicate with a BMS 200. The communication interface 140 may receive temperature measurement region information from the BMS 200. The temperature measurement region information may include location information on at least one region (i.e., the target object) of which a temperature is to be measured, on the base 110, that is, a temperature measurement region. The communication interface 140 may receive a temperature request signal transmitted from the BMS 200. The temperature request signal may be a signal for instructing start of a temperature measurement operation. The communication interface 140 may transmit temperature information on the temperature measurement region from the BMS 200 according to control of the processor 160. The temperature information on the temperature measurement region may be information on a temperature of the temperature measurement region and may include information on a highest temperature in the temperature measurement region, a lowest temperature in the temperature measurement region, and an average temperature in the temperature measurement region. The communication interface 140 may transmit a warning signal to the BMS 200 according to control of the processor 160. The warning signal may be information for notifying of occurrence of an abnormality in a specific region on the base 110 and may include location information on the region in which the abnormality occurs. In some embodiments, the abnormality may be a situation in which the electrolyte stored in the battery cell leaks.

At least one command which is to be executed by the processor 160, which will be described in further detail below, may be stored in the memory 150. The memory 150 may be implemented as a volatile storage medium and/or non-volatile storage medium, such as a read only memory (ROM) and/or a random-access memory (RAM).

The processor 160 may be a main part, which performs a temperature measurement operation and an abnormality detection operation. The processor 160 may be implemented as a central processing unit (CPU) or system on chip (SoC), may drive an operating system or application to control a plurality of hardware or software components connected to the processor 160, and may perform various suitable data processes and operations. The processor 160 may be configured to execute at least one command stored in the memory 150 and store result data of the execution in the memory 150.

In some embodiments, the temperature measurement operation may be a series of processes of measuring a temperature of a region, that is, a temperature measurement region, on the base 110. In some embodiments, the abnormality detection operation may be a series of processes of determining whether an abnormality occurs in a region on the base 110. Examples of the temperature measurement operation and the abnormality detection operation performed by the temperature measurement apparatus 100 according to some embodiments will be separately described in further detail below.

First, the processor 160 may set at least one temperature measurement region. The processor 160 may receive temperature measurement region information from the outside (e.g., the BMS 200) through the communication interface 140 and set the temperature measurement region on the basis of the received temperature measurement region information. The temperature measurement region information may include location information on at least one temperature measurement region, and the processor 160 may set the temperature measurement region on the basis of the location information on the temperature measurement region. At least one thermistor 121 may be included in the temperature measurement region.

The processor 160 may repeatedly perform a process of controlling the power supply circuit 130 to supply power to a target thermistor, detecting a resistance value of the target thermistor, and calculating a temperature of a region corresponding to the target thermistor on the basis of the resistance value of the target thermistor for the plurality of thermistors 121 included in the temperature measurement region while changing a target thermistor. In some embodiments, the region corresponding to the target thermistor may be a region on the base 110 in which the target thermistor is installed. Location information on each of the plurality of thermistors 121 constituting the thermistor array 120 may be prestored in the memory 150, and the processor 160 may compare the location information on each of the plurality of thermistors 121 stored in the memory 150 with the location information on the temperature measurement region to recognize the thermistor 121 included in the temperature measurement region.

The processor 160 may supply the power to the target thermistor by applying control signals to the first and second wires 133 and 134 connected to the target thermistor to turn on the first and second transistors 131 and 132 connected to the target thermistor. Relational information on connection relationships between the first and second wires 133 and 134 and the thermistor 121 may be stored in the memory 150, and the processor 160 may detect the first and second wires 133 and 134 corresponding to the target thermistor from the relational information stored in the memory 150. In some embodiments, the control signals may be signals for turning on the thermistor 121.

For example, when it is assumed that the thermistor array 120 is formed with a 6x6 matrix structure and a target thermistor is located in a third column from the left and a second row from the top (i.e., the location coordinates of the target thermistor are (3, 2)), the processor 160 may activate the target thermistor by supplying power to the target thermistor by applying control signals to the second wire 134 located in the third column from the left and the first wire 133 located in the second row from the top to turn on the first and second transistors 131 and 132 connected to the target therm istor.

As the power is supplied, the target thermistor may output a voltage signal or current signal, and the processor 160 may detect a resistance value of the target thermistor from the signal output from the target thermistor. Relational information on a temperature according to the resistance value may be prestored in the memory 150, and the processor 160 may detect a temperature corresponding to the resistance value of the target thermistor from the relational information stored in the memory 150 and calculate the detected temperature as a temperature of a region corresponding to the target thermistor.

The processor 160 may generate temperature information on a temperature measurement region from a result in which a temperature of a region corresponding to each of the plurality of thermistors 121 included in the temperature measurement region is calculated. The temperature information on the temperature measurement region may include information on a temperature of each location of the temperature measurement region. The temperature information on the temperature measurement region may include information on at least one of a highest temperature of the temperature measurement region, a lowest temperature of the temperature measurement region, and an average temperature of the temperature measurement region. The processor 160 may recognize a lowest temperature value of temperature values of the regions corresponding to the plurality of thermistors 121 included in the temperature measurement region and calculate the recognized temperature value as the lowest temperature in the temperature measurement region. The processor 160 may recognize a highest temperature value of the temperature values of the regions corresponding to the plurality of thermistors 121 included in the temperature measurement region and calculate the recognized temperature value as the highest temperature in the temperature measurement region. The processor 160 may calculate an average value of the temperature values of the regions corresponding to the plurality of thermistors 121 included in the temperature measurement region and output the calculated average value as the average temperature of the temperature measurement region.

In some embodiments, the processor 160 may calculate a differential value for at least one of a highest temperature in a temperature measurement region, a lowest temperature in the temperature measurement region, and an average temperature of the temperature measurement region, and generate temperature information on the temperature measurement region including information on the differential value.

The processor 160 may generate temperature information on at least one temperature measurement region when a temperature request signal is received and transmit the generated temperature information to the outside (e.g., the BMS 200) through the communication interface 140. In some embodiments, the processor 160 may generate temperature information on at least one temperature measurement region and transmit the generated temperature information to the outside according to a set interval. The set interval may be set to any of various values by the BMS 200 or user.

FIG. 7 is the cross-sectional view illustrating the structure of the power supply circuit according to some embodiments of the present invention. Before the abnormality detection operation is described, a principle of the temperature measurement apparatus 100 detecting an abnormality will be described with reference to FIG. 7.

As illustrated in FIG. 7, when the first region 111 of the base 110 and the third and fourth wires 135 and 136 are formed of materials easily dissolved in the electrolyte of the battery and when the electrolyte leaks from the battery cell, the first region 111 of the base 110 and the third and fourth wires 135 and 136 are dissolved. When the third or fourth wires 135 or 136 is dissolved in the electrolyte, as the connection between the first transistor 131 or the second transistor 132 and the thermistor 121 is disconnected, temperature may not be properly measured by the thermistor, and thus a temperature difference between the temperature measured by a corresponding thermistor and the temperature measured by an adjacent thermistor adjacent to the corresponding thermistor that is greater than or equal to a set or predetermined value may occur. In some embodiments, whether the abnormality occurs may be determined by checking whether the temperature difference between the thermistors 121 is greater than or equal to the set or predetermined value.

When a difference between a temperature of a region corresponding to a target thermistor and a temperature of a region corresponding to an adjacent thermistor adjacent to the target thermistor is greater than or equal to a preset reference temperature, the processor 160 may determine that an abnormality occurs in the region corresponding to the target thermistor or the region corresponding to the adjacent thermistor. In some embodiments, the adjacent thermistor may be a thermistor adjacent to the thermistor (e.g., target thermistor) corresponding to the region in which it is to be determined whether the abnormality occurs and may be a thermistor located at a left, right, upper, or lower side of the target thermistor. The processor 160 may calculate a temperature of each region corresponding to the target thermistor and the adjacent thermistor through the above-described temperature measurement operation. The reference temperature may be a key value for determining whether an abnormality occurs, and may be, for example, 20 °C, but is not limited thereto. In some embodiments, the processor 160 may check whether the same result is extracted even when performing the abnormality detection operation on different adjacent thermistors and check whether a region in which an abnormality occurs is a region corresponding to a target thermistor or a region corresponding to an adjacent thermistor.

When it is determined that an abnormality occurs in a region corresponding to a target thermistor or a region corresponding to an adjacent thermistor, the processor 160 may generate a warning signal and transmit the generated warning signal to the outside (e.g., the BMS 200) through the communication interface 140. The warning signal may include location information on a region (e.g., the region corresponding to the target thermistor and/or the region corresponding to the adjacent thermistor) in which the abnormality occurs.

The above-described abnormality detection operation may be performed in a process of calculating temperature information on a temperature measurement region or may be performed according to a request from the outside (e.g., the BMS 200). In addition, the abnormality detection operation may be performed at a set interval for the plurality of thermistors 121 constituting the thermistor array 120. The set interval may be set to any of various values by the BMS 200 or the user.

A battery apparatus according to some embodiments of the present invention will be described based on the battery structure and the temperature measurement apparatus 100 described above, specific description of the components which are the same as the above-described content may be omitted, and an interaction between a BMS 200 and a temperature measurement apparatus 100 will be mainly described.

FIG. 8 is a block diagram illustrating the battery apparatus according to some embodiments of the present invention.

Referring to FIG. 8, the battery apparatus according to some embodiments may include the temperature measurement apparatus 100 and the BMS 200.

The temperature measurement apparatus 100 may be coupled to a battery cell, a battery module, or a battery pack. The temperature measurement apparatus 100 may detect a temperature of at least a partial region (e.g., the temperature measurement region) of an area in which the temperature measurement apparatus 100 is coupled thereto according to a request from the BMS 200 to generate temperature information and transmit the generated temperature information to the BMS 200.

The BMS 200 may serve various suitable functions for managing a battery. For example, the BMS 200 may detect a current and a voltage of the battery cell, the battery module, or the battery pack and a voltage and a temperature of an open circuit.

The BMS 200 may transmit temperature measurement region information to the temperature measurement apparatus 100. The temperature measurement region information may be preset by a user and stored in a memory 150 of the BMS 200. When the temperature measurement apparatus 100 receives the temperature measurement region information, the temperature measurement apparatus 100 may set at least one temperature measurement region on the basis of the temperature measurement region information. The temperature measurement apparatus 100 may perform an operation for setting the temperature measurement region when initially driven.

The BMS 200 may transmit a temperature request signal to the temperature measurement apparatus 100 to collect temperature information of a target object. When the temperature measurement apparatus 100 receives the temperature request signal, the temperature measurement apparatus 100 may generate temperature information on at least one temperature measurement region and transmit the generated temperature information to the BMS 200. In some embodiments, the temperature measurement apparatus 100 may generate temperature information on at least one temperature measurement region and transmit the generated temperature information to the BMS 200 at a set interval.

The BMS 200 may transmit an abnormality detection signal to the temperature measurement apparatus 100 to determine whether an abnormality occurs in a target object. When the temperature measurement apparatus 100 receives the abnormality detection signal, the temperature measurement apparatus 100 may determine whether an abnormality occurs in a region corresponding to each of a plurality of thermistors 121 constituting a thermistor array 120 and transmit information on a result of the determination to the BMS 200. In some embodiments, the temperature measurement apparatus 100 may determine whether an abnormality occurs in a region corresponding to each of the plurality of thermistors 121 constituting the thermistor array 120 and transmit information on a result of the determination to the BMS 200 at a set interval.

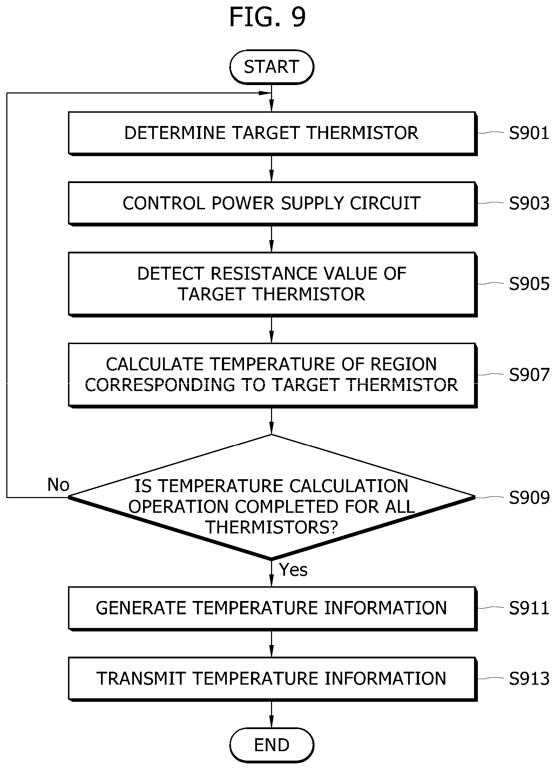

FIG. 9 is a view illustrating a flowchart of a process of measuring a temperature by a temperature measurement apparatus according to some embodiments of the present invention. A process in which a temperature measurement apparatus 100 measures a temperature will be described with reference to FIG. 9, specific description of the components which are the same as the above-described content may be omitted, and a time sequential process will be mainly described.

First, a processor 160 may determine any one of a plurality of thermistors 121 included in a temperature measurement region as a target thermistor (S901). Here, the processor 160 may determine a thermistor, which has not been determined as a target thermistor among the plurality of thermistors 121 included in the temperature measurement region, as the target thermistor.

When the target thermistor is determined, the processor 160 may control a power supply circuit 130 to supply power to the target thermistor (S903). In operation S903, the processor 160 may supply the power to the target thermistor by turning on first and second transistors 131 and 132 connected to the target thermistor by applying control signals to first and second wires 133 and 134 connected to the target therm istor.

When the power supply circuit 130 is completely controlled, the processor 160 may detect a resistance value of the target thermistor (S905) and calculate a temperature of a region corresponding to the target thermistor on the basis of the detected resistance value (S907).

When the temperature of the region corresponding to the target thermistor is completely calculated, the processor 160 may determine whether temperature calculation operations are completed for all thermistors included in the temperature measurement region (S909).

When the temperature calculation operations are not completed for all thermistors included in the temperature measurement region, the processor 160 may return to operation S901. However, when the temperature calculation operations are completed for all thermistors included in the temperature measurement region, the processor 160 may generate temperature information on the temperature measurement region (S911) and transmit the generated temperature information to the outside (e.g., a BMS 200) through a communication interface 140 (S913).

When the temperature measurement region is a plurality of temperature measurement regions, the processor 160 may generate temperature information on each of the plurality of temperature measurement regions by repeating the process of FIG. 9 and transmit the generated temperature information.

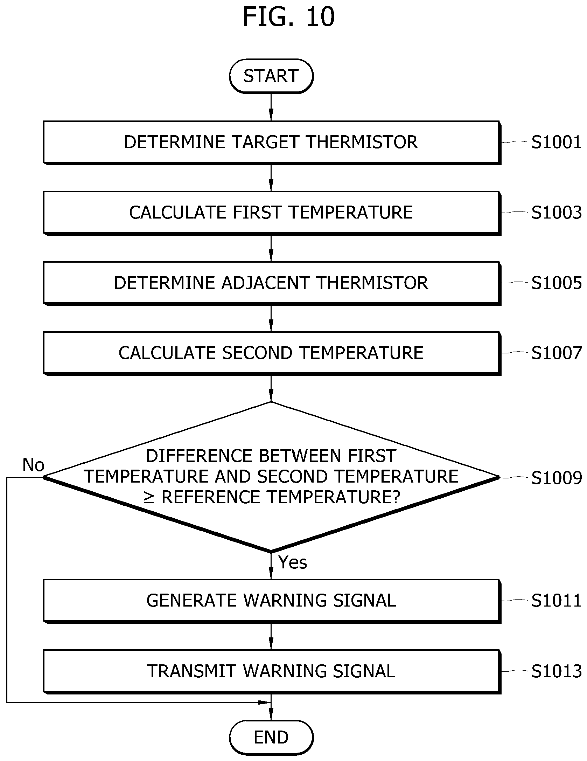

FIG. 10 is a view illustrating a flowchart of a process of detecting an abnormality by a temperature measurement apparatus according to some embodiments of the present invention. A process in which a temperature measurement apparatus 100 detects an abnormality will be described with reference to FIG. 10. Here, specific description of the components which are the same as the above-described content may be omitted, and a time sequential process will be mainly described.

First, a processor 160 may determine any one of a plurality of thermistors 121 constituting a thermistor array 120 as a target thermistor (S1001) and calculate a temperature (hereinafter, a first temperature) of a region corresponding to the target thermistor. The processor 160 may calculate the first temperature by performing operations S903 to S907 (S1003).

Then, the processor 160 may determine any one of a plurality of thermistors 121 adjacent to the target thermistor as an adjacent thermistor (S1005) and calculate a temperature (hereinafter, a second temperature) of a region corresponding to the adjacent thermistor (S1007). The processor 160 may calculate the second temperature by performing operations S903 to S907.

Then, the processor 160 may determine whether a difference between the first temperature and the second temperature is greater than or equal to a preset reference temperature (e.g., 20 degrees) (S1009).

When the difference between the first temperature and the second temperature is greater than or equal to the preset reference temperature, the processor 160 may determine that an abnormality occurs in the region corresponding to the target thermistor or the region corresponding to the adjacent thermistor, generate a warning signal (S1011), and transmit the generated warning signal to the outside (e.g., a BMS 200) through a communication interface 140 (S1013).

The processor 160 may check whether an abnormality occurs in a region corresponding to each of the plurality of thermistors 121 constituting the thermistor array 120 by repeating the process of FIG. 10.

According to the above-described embodiments of the present invention, internal temperatures of a sealed structure can be measured at various suitable locations using a thermistor array including a plurality of thermistors.

In addition, according to some embodiments of the present invention, as internal temperatures of a battery pack are measured at various suitable locations and information on the measured temperatures is output to a BMS, the BMS can be assisted to more accurately calculate battery status information such as a state of charge (SOC), a time to empty (TTE), a time to full (TTF), and the like.

In addition, according to some embodiments of the present invention, as a portion of a temperature measurement apparatus is formed of a material which is dissolved in an electrolyte, an abnormal situation in which the electrolyte is expelled from a battery cell can be quickly detected.

According to some embodiments of the present invention, internal temperatures of a sealed structure can be measured at various suitable locations using a thermistor array including a plurality of thermistors.

In addition, according to some embodiments of the present invention, internal temperatures of a battery pack can be measured at various suitable locations, and information on the measured temperatures can be output to a battery management system to help the battery management system more accurately calculate battery status information such as a state of charge (SOC), a time to empty (TTE), and a time to full (TTF).

In addition, according to some embodiments of the present invention, as a portion of a temperature measurement apparatus is formed of a material which is dissolved in an electrolyte, an abnormal situation in which the electrolyte is expelled from a battery cell can be quickly detected.

The embodiments described herein may be implemented, for example, as a method or process, a device, a software program, a data stream, or a signal. Although discussed in the context of a single type of implementation (e.g., discussed only as a method), features discussed herein may also be implemented in other forms (e.g., a device or a program). The device may be implemented by suitable hardware, software, firmware, and the like. The method may be implemented on a device, such as a processor that generally refers to a processing device including a computer, a microprocessor, an integrated circuit, a programmable logic device, etc. The processor includes a communication device such as a computer, a cell phone, a personal digital assistant (PDA), and other devices that facilitate communication of information between the device and end-users.

Although the present disclosure has been described with reference to embodiments and drawings illustrating aspects thereof, the present disclosure is not limited thereto. Various suitable modifications and variations can be made by a person skilled in the art to which the present disclosure belongs within the scope of the technical information of the present disclosure and the claims and their equivalents, below.

## Claims

1. A temperature measurement apparatus comprising:
a base;
a thermistor array comprising a plurality of thermistors in different regions of the base;
a power supply circuit configured to supply power to any one of the plurality of thermistors; and
a processor connected to the plurality of thermistors and the power supply circuit, and configured to determine a target thermistor among the plurality of thermistors, to control the power supply circuit to supply the power to the target thermistor, to detect a resistance value of the target thermistor, and to calculate a temperature of a region corresponding to the target thermistor on the basis of the resistance value of the target thermistor.

2. The temperature measurement apparatus of claim 1, wherein the processor is configured to determine any one of the plurality of thermistors in a temperature measurement region as the target thermistor.

3. The temperature measurement apparatus of claim 2, further comprising a communication interface configured to communicate with an external apparatus,
wherein the processor is configured to set the temperature measurement region according to temperature measurement region information received through the communication interface, and
wherein the temperature measurement region information comprises location information on the temperature measurement region.

4. The temperature measurement apparatus of any preceding claim, wherein the plurality of thermistors is on the base in a matrix arrangement formed along a plurality of row lines and a plurality of column lines.

5. The temperature measurement apparatus of claim 4, wherein the power supply circuit comprises:
a plurality of first transistors connected to the thermistors;
a plurality of second transistors connected to the thermistors;
a plurality of first wires connected to the first transistors that are connected to the thermistors located at the row lines; and
a plurality of second wires connected to the second transistors that are connected to the thermistors located at the column lines.

6. The temperature measurement apparatus of claim 5, wherein the power supply circuit further comprises:
a plurality of third wires that connect the first transistors and the thermistors; and
a plurality of fourth wires that connect the second transistors and the thermistors,
wherein the third and fourth wires are formed of a material that is dissolvable in a specific material.

7. The temperature measurement apparatus of claim 6, wherein regions in which the third and fourth wires are positioned, among regions of the base, are formed of materials which are dissolvable in the specific material.

8. The temperature measurement apparatus of any of claims 5-7, wherein the processor is configured to supply the power to the target thermistor by applying voltages to the first and second wires corresponding to the target thermistor to turn on the first and second transistors connected to the target thermistor.

9. The temperature measurement apparatus of any of claims 2-8, wherein the processor is configured to:
calculate a temperature of a region corresponding to each of the plurality of thermistors in the temperature measurement region by repeatedly performing a process of calculating the temperature of the region corresponding to the target thermistor while changing the target thermistor; and
generate temperature information on the temperature measurement region from a result in which the temperature of the region corresponding to each of the plurality of thermistors is calculated.

10. A method of measuring a temperature comprising:
determining, by a processor, a target thermistor among a plurality of thermistors in different regions of a base;
controlling, by the processor, a power supply circuit that is configured to supply power to any one of the plurality of thermistors, to supply the power to the target therm istor;
detecting, by the processor, a resistance value of the target thermistor; and
calculating, by the processor, a temperature of a region corresponding to the target thermistor on the basis of the resistance value of the target thermistor.

11. The method of claim 10, wherein, in the determining of the target thermistor, the processor is configured to determine any one of the plurality of thermistors in a temperature measurement region as the target thermistor.

12. The method of claim 11, further comprising setting, by the processor, a temperature measurement region according to temperature measurement region information received from an external apparatus before the determining of the target therm istor,
wherein the temperature measurement region information comprises location information on the temperature measurement region.

13. The method of any of claims 10-12, further comprising:
calculating, by the processor, a temperature of a region corresponding to an adjacent thermistor adjacent to the target thermistor; and
determining, by the processor, that an abnormality occurs in the region corresponding to the target thermistor or the adjacent thermistor based on a difference between the temperature of the region corresponding to the adjacent thermistor and the temperature of the region corresponding to the target thermistor being greater than or equal to a reference temperature.

14. The method of any of claims 11-13, further comprising:
calculating, by the processor, a temperature of a region corresponding to each of the plurality of thermistors in the temperature measurement region by repeatedly performing a process of calculating the temperature of the region corresponding to the target thermistor while changing the target thermistor; and
generating, by the processor, temperature information on the temperature measurement region from a result in which the temperature of the region corresponding to each of plurality of thermistors is calculated.

15. A battery apparatus comprising:
a battery management system; and
a temperature measurement apparatus coupled to a battery cell or battery pack, wherein the temperature measurement apparatus comprises:
a base;
a thermistor array comprising a plurality of thermistors in different regions of the base;
a power supply circuit configured to supply power to any one of the plurality of thermistors; and
a processor connected to the plurality of thermistors and the power supply circuit, and configured to determine a target thermistor among the plurality of thermistors, to control the power supply circuit to supply the power to the target thermistor, to detect a resistance value of the target thermistor, and to calculate a temperature of a region corresponding to the target thermistor on the basis of the resistance value of the target thermistor;
and wherein the temperature measurement apparatus is configured to detect a temperature of at least a portion of an area in which the temperature measurement apparatus is coupled thereto according to a request from the battery management system to generate temperature information, and to transmit the generated temperature information to the battery management system.
